# EUROPÄISCHE PATENTSCHRIFT

(11) **EP 3 699 347 B1**
(45) Veröffentlichungstag und Bekanntmachung des Hinweises auf die Patenterteilung: **16.11.2022**
(21) Anmeldenummer: 20153206.6
(22) Anmeldetag: 22.01.2020
(51) Int. Cl.: D06F 34/05, A47L 15/00, D06F 103/40, D06F 105/54

(54) **ELEKTRISCHES HAUSHALTSGERÄT**
ELECTRIC HOUSEHOLD DEVICE
APPAREIL ÉLECTROMÉNAGER

(30) Priorität: 20.02.2019 DE 102019202284
(43) Veröffentlichungstag der Anmeldung: 26.08.2020
(73) Patentinhaber: BSH Hausgeräte GmbH, 81739 München (DE)
(72) Erfinder: Cabaleiro Martins, Marcelo, 13629 Berlin (DE); Gorzitza, Burkhard, 13158 Berlin (DE); Kittan, Jens, 16727 Oberkraemer (DE); Mühl, Jürgen, 10439 Berlin (DE)

(56) Entgegenhaltungen:
- EP-A1- 2 706 138
- EP-A1- 3 045 579
- WO-A1-2018/196608
- DE-A1-102017 212 327

## Beschreibung

Die vorliegende Erfindung betrifft ein elektrisches Haushaltsgerät und ein Verfahren für ein elektrisches Haushaltsgerät.

Elektrische Haushaltsgeräte, wie insbesondere Waschmaschinen, aber auch Waschtrockner oder Spülmaschinen, können durch die Verwendung von Kommunikationsgeräten, wie einem Handy, Tablet oder dergleichen ferngewartet, d.h. ferngesteuert werden. Hierbei können verschiedene Aktionen, wie ein Starten eines auf dem elektrischen Haushaltsgerät implementierten Reinigungsprogramms oder ein Ausschalten des elektrischen Haushaltsgeräts vorgenommen werden.

In der EP 2 706 138 A1 ist ein Online-System mit einer intelligenten Waschmaschine, die mit einem Server kommuniziert, offenbart.

In der WO 2018/196608 A1 ist eine Waschmaschine mit einem intelligenten Endgerät offenbart.

Aufgrund von Sicherheitsanforderungen kann vorgesehen sein, dass eine Fernsteuerung eines elektrischen Haushaltsgeräts, insbesondere einer Waschmaschine erst dann möglich ist, wenn nach dem Schließen einer Tür des elektrischen Haushaltsgeräts lokal eine weitere Aktion durchgeführt wird. Lokal heißt hierbei, dass die Aktion vor Ort, also am elektrischen Haushaltsgerät selbst durchgeführt wird. Eine solche weitere lokale Aktion kann beispielsweise ein manuelles Einschalten des elektrischen Haushaltsgeräts oder ein Starten eines Reinigungsprogramms sein. Darüber hinaus ist es in der Regel notwendig, dass lokal eine Fernwarteeinrichtung des elektrischen Haushaltsgeräts aktiviert wird, beispielsweise indem eine entsprechende Taste auf einem Bedienfeld des elektrischen Haushaltsgeräts betätigt wird, um die Fernsteuerung des elektrischen Haushaltsgeräts zu erlauben. Wird das Aktivieren dieser Fernwarteeinrichtung vergessen, so kann das elektrische Haushaltsgerät nicht ferngesteuert werden, d.h. beispielsweise ein Reinigungsprogramm gestartet oder beendet werden. Die Möglichkeit, den Betrieb des elektrischen Haushaltsgeräts "remote" zu überwachen, beispielsweise ein Abfragen eines Zustands, insbesondere eines Programmstandes des elektrischen Haushaltsgeräts mittels eines Smartphones, kann unabhängig davon gegeben sein, ob die vorstehend beschriebenen Erfordernisse für die Fernsteuerung des elektrischen Haushaltsgeräts erfüllt sind oder nicht.

Es ist die der Erfindung zugrundeliegende Aufgabe, ein verbessertes Konzept für ein elektrisches Haushaltsgerät aufzuzeigen.

Diese Aufgabe wird durch die Gegenstände mit den Merkmalen nach den unabhängigen Ansprüchen gelöst. Vorteilhafte Ausführungsformen sind Gegenstand der abhängigen Ansprüche, der Beschreibung und der Zeichnungen.

Diese Aufgabe wird durch ein erfindungsgemäßes elektrisches Haushaltsgerät gelöst, mit einer Kommunikationsschnittstelle, die ausgebildet ist, über eine Kommunikationsverbindung mit einem Kommunikationsgerät zu kommunizieren; einer Fernwarteeinrichtung, die ausgebildet ist, eine Bedienung des elektrischen Haushaltsgeräts durch das Kommunikationsgerät zu ermöglichen; einer Türe, die ausgebildet ist, in einem offenen Zustand einen Bereich des elektrischen Haushaltsgeräts zu öffnen oder in einem geschlossenen Zustand den Bereich zu schließen; einer Überwachungseinrichtung, die ausgebildet ist, den Zustand der Türe zu erfassen; und einer Steuerung, die ausgebildet ist, die Fernwarteeinrichtung automatisch zu aktivieren, wenn die Türe in dem geschlossenen Zustand ist und eine lokale Aktivierung des elektrischen Haushaltsgeräts erfolgt, wobei die lokale Aktivierung ein Anschalten des elektrischen Haushaltsgeräts umfasst, bei dem eine Betriebsspannung an die Steuerung angelegt wird und/oder das elektrische Haushaltsgerät von einem Standby-Zustand in einen Betriebszustand versetzt wird.

Dadurch wird der technische Vorteil erreicht, dass eine Aktivierung einer Fernwarteeinrichtung, beispielsweise eine sogenannte Remote Start Allowance, kurz RSA, automatisch durch eine lokale Aktivierung des elektrischen Haushaltsgeräts erfolgen kann. Durch die Aktivierung der Fernwarteeinrichtung kann ein Benutzer über ein Kommunikationsgerät auf das elektrische Haushaltsgerät zugreifen, um bestimmte Handlungen vorzunehmen, beispielsweise ein auf dem elektrischen Haushaltsgerät implementiertes Programm zu starten, auch wenn er vergessen hat, die Fernwarteeinrichtung lokal zu aktivieren. Gleichzeitig wird durch die Überprüfung des Zustands der Türe sowie das Vorliegen einer weiteren lokalen Aktion des Benutzers an dem elektrischen Haushaltsgerät, nämlich die lokale Aktivierung des elektrischen Haushaltsgeräts ein hoher Sicherheitsstandard gewährleistet, beispielsweise die Norm IEC 60335-2-7, Absatz 20.106 erfüllt.

Ein Benutzer kann die Fernwartefunktion nutzen und beispielsweise ein Programm aus der Ferne starten, wenn das elektrische Haushaltsgerät angeschaltet wurde. Es kann auf zusätzliche Bedienelemente verzichtet werden, beispielsweise eine Taste zum Aktivieren der Fernwarteeinrichtung.

Die Fernwarteeinrichtung kann eine Fernwartung ermöglichen, hier also ein Ausschalten des elektrischen Haushaltsgeräts, ein Starten, Stoppen oder Beenden eines Programms und dergleichen. Darüber hinaus kann das elektrische Haushaltsgerät ausgebildet sein, dem Kommunikationsgerät zu ermöglichen, den Betrieb des elektrischen Haushaltsgeräts "remote" zu überwachen, beispielsweise ein Abfragen eines Zustands, insbesondere eines Programmstandes des elektrischen Haushaltsgeräts, und zwar unabhängig davon, ob die Türe in dem geschlossenen Zustand ist und eine lokale Aktivierung des elektrischen Haushaltsgeräts erfolgt ist.

Die Überwachungseinrichtung kann in die Steuerung integriert sein. Die Steuerung kann eine zentrale Steuerung des elektrischen Haushaltsgeräts bzw. eine Programmsteuerung sein.

Wird das elektrische Haushaltsgerät ausgeschaltet oder in einen Standby-Zustand versetzt, kann eine Melodie erklingen. Ebenso können weitere Aktionen, wie das Aktivieren der Fernwarteeinrichtung oder der Start eines Programms durch ein Geräusch angezeigt werden, insbesondere eine charakteristische Melodie. Die beschriebenen Funktionen sind auch an einem elektrischen Haushaltsgerät implementierbar, das keine Kommunikationsschnittstelle aufweist, dort zwar ohne Funktion, aber auch ohne Einschränkungen bei der Benutzung, also abwärtskompatibel.

In einer Ausführungsform ist das elektrische Haushaltsgerät ein Wäschepflegegerät, insbesondere eine Waschmaschine oder ein Waschtrockner, oder eine Spülmaschine.

Dadurch wird der technische Vorteil erreicht, dass eine Fernwartung bei den entsprechenden elektrischen Haushaltsgeräten benutzerergonomisch und betriebssicher umgesetzt werden kann.

In einer Ausführungsform umfasst die Kommunikationsschnittstelle eine Mobilfunkschnittstelle und/oder ein WLAN-Schnittstelle und/oder eine LAN-Schnittstelle.

Dadurch wird der technische Vorteil erreicht, dass eine Kommunikation mit dem Internet und/oder einem Mobilfunknetz bereitgestellt werden kann.

In einer Ausführungsform ist die Fernwarteeinrichtung ausgebildet, ein Starten eines Programms des elektrischen Haushaltsgeräts, ein Unterbrechen oder ein Beenden eines Programms des elektrischen Haushaltsgeräts, ein Ändern von Betriebsparametern eines Programms des elektrischen Haushaltsgeräts, beispielsweise einer Betriebstemperatur, einer Schleuderzahl und dergleichen, eine Auswahl eines anderen Programms des elektrischen Haushaltsgeräts und/oder ein Deaktivieren des elektrischen Haushaltsgeräts zu ermöglichen.

Dadurch wird der technische Vorteil erreicht, dass ein Benutzer das elektrische Haushaltsgerät aus der Ferne einschalten und ausschalten bzw. stoppen kann. Dies kann eine Sicherheit erhöhen, aber auch ein Sicherheitsgefühl des Benutzers erhöhen.

In einer Ausführungsform umfasst die Überwachungseinrichtung einen Sensor, der an einem Schloss der Türe angeordnet ist und erfasst, ob die Türe in dem geschlossenen Zustand oder dem offenen Zustand ist.

Dadurch wird der technische Vorteil erreicht, dass detektiert werden kann, ob die Türe sicher geschlossen ist, d.h. ob das Schloss der Türe eingeschnappt ist und die Türe sicher verriegelt.

Erfindungsgemäß umfasst die lokale Aktivierung ein Anschalten des elektrischen Haushaltsgeräts, bei dem eine Betriebsspannung an die Steuerung angelegt wird oder das elektrische Haushaltsgerät von einem Standby-Zustand bzw. Energiesparmodus in einen Betriebszustand versetzt wird. In einer Ausführungsform ist die Überwachungseinrichtung ausgebildet, auch in einem solchen Standby-Zustand den Zustand der Türe zu erfassen. Dies ermöglicht, dass dann, wenn das elektrische Haushaltsgerät eingeschaltet wird, d.h. eine Betriebsspannung an die Steuerung angelegt wird oder das elektrische Haushaltsgerät vom Standby-Zustand in den Betriebszustand versetzt wird, automatisch die Fernwartfunktion aktiviert wird, wenn die Türe in dem geschlossenen Zustand ist.

Dadurch wird der technische Vorteil erreicht, dass bei einem Einschalten des elektrischen Haushaltsgeräts bei geschlossener Türe automatisch die Fernwarteeinrichtung aktiviert wird. Somit kann ein Benutzer nicht vergessen, die Fernwarteeinrichtung zu aktivieren.

In einer Ausführungsform umfasst die lokale Aktivierung ein Starten eines Programms auf dem elektrischen Haushaltsgerät.

Dadurch wird der technische Vorteil erreicht, dass bei einem Einschalten eines Programms des elektrischen Haushaltsgeräts bei geschlossener Türe automatisch die Fernwarteeinrichtung aktiviert wird. Somit kann ein Benutzer nicht vergessen, die Fernwarteeinrichtung zu aktivieren. Beispielsweise kann hierbei das elektrische Haushaltsgerät bei geöffneter Türe in Betrieb genommen werden, beispielsweise eine Betriebsspannung angelegt oder das elektrische Haushaltsgerät aus einem Standby-Zustand in einen Betriebszustand versetzt werden. Wird dann bei geschlossener Türe ein Programm, insbesondere ein Wäschepflegeprogramm oder ein Spülprogramm, gestartet, wird automatisch die Fernwarteeinrichtung aktiviert.

In einer Ausführungsform ist die Steuerung ausgebildet, ein Aktivieren eines Programms zu unterbinden, solange die Türe in dem offenen Zustand ist.

Das Programm kann hierbei lokal an dem elektrischen Haushaltsgerät gestartet werden. Dadurch wird der technische Vorteil erreicht, dass sichergestellt werden kann, dass der Benutzer die sicherheitsrelevante Handlung abgeschlossen hat, hier das Schließen der Türe. Das Erfordernis der zweiten weiteren Handlung neben dem Starten des Programms ist also erfüllt. Der Benutzer kann dann über die Kommunikationsschnittstelle das elektrische Haushaltsgerät fernwarten, d.h. das Programm anhalten, beenden oder wieder starten.

In einer Ausführungsform ist die Steuerung ausgebildet, das elektrische Haushaltsgerät auszuschalten oder in einen Standby-Zustand zu versetzen, wenn das elektrische Haushaltsgerät eingeschaltet ist und die Türe geöffnet wird.

Üblicherweise verwenden Benutzer das elektrische Haushaltsgerät mit unterschiedlichen Benutzungsabläufen. Beispielsweise wird das elektrische Haushaltsgerät erst eingeschaltet, dann die Türe geöffnet, dann Beladen, dann die Türe wieder geschlossen, dann die Fernwartung aktiviert und anschließend ferngestartet. In einem anderen Beispiel wird erst die Türe geöffnet, dann das elektrische Haushaltsgerät beladen, dann die Türe geschlossen, dann das elektrische Haushaltsgerät eingeschaltet, dann die Fernwartung aktiviert und anschließend ferngestartet. Indem die Steuerung das elektrische Haushaltsgerät ausschaltet bzw. in einen Standby-Zustand versetzt, wenn die Türe geöffnet wird, wird ein Benutzer gezwungen, immer vor dem Betrieb des elektrischen Haushaltsgeräts die Türe zu schließen. Somit wird eine sicherheitsrelevante Tätigkeit zwangsweise lokal ausgeführt, bevor das elektrische Haushaltsgerät eingeschaltet wird. Das heißt, die Fernwartung darf und kann automatisch immer aktiviert werden. Das Einschalten des elektrischen Haushaltsgeräts wird nicht so häufig von einem Benutzer vergessen wie das Aktivieren der Fernwartung. Das heißt, das Einschalten des elektrischen Haushaltsgeräts und das Aktivieren der Fernwartung kann auf ein Bedienelement, insbesondere eine Ein-Aus-Taste, zusammengelegt werden.

Dadurch wird der technische Vorteil erreicht, dass ein Benutzer gezwungen wird, das elektrische Haushaltsgerät nur mit geschlossener Türe anzuschalten. Somit ist immer gewährleistet, dass durch das Schließen der Türe bereits eine lokale Benutzeraktion durchgeführt wurde und auch im Hinblick auf die oben genannten sicherheitstechnischen Voraussetzungen kann und darf die Fernwarteeinrichtung aktiviert werden.

Beim Ausschalten des elektrischen Haushaltsgeräts während ein Programm läuft, insbesondere bei einem Nachladen des elektrischen Haushaltsgeräts, wenn z.B. während eines Wäschepflegeprogramms die Türe geöffnet wird, um ein weiteres Wäschestück einzufügen, kann die Programmposition gemerkt werden und das Programm nach dem Einschalten dort fortgesetzt werden, wo das Programm beim Öffnen der Türe unterbrochen wurde.

In einer Ausführungsform ist die Steuerung ausgebildet, die Fernwarteeinrichtung zu deaktivieren, wenn die Fernwarteeinrichtung aktiv ist und die Überwachungseinrichtung erfasst, dass die Türe in dem offenen Zustand ist.

Dadurch wird der technische Vorteil erreicht, dass ein hoher Sicherheitsstandard trotz automatischer Aktivierung der Fernwarteeinrichtung erhalten bleibt. Wird zuerst die Fernwarteeinrichtung automatisch aktiviert, so kann, wenn die Türe nachher noch geöffnet wird, die Fernwarteeinrichtung deaktiviert werden, um das Vorliegen der notwendigen Sicherheitsvoraussetzungen sicher zu stellen.

In einer Ausführungsform ist die Steuerung ausgebildet, ein lokales Aktivieren des elektrischen Haushaltsgeräts zu unterbinden, solange die Türe in dem offenen Zustand ist.

Dadurch wird der technische Vorteil erreicht, dass ein Benutzer das Gerät nicht einschalten kann, d.h. aktivieren kann, solange die Türe geöffnet ist. Hierdurch kann vorgegeben werden, dass das elektrische Haushaltsgerät nur bei geschlossener Türe aktiviert werden kann, beispielsweise indem eine Ein-Aus-Taste betätigt wird, was dann immer ein automatisches Aktivieren der Fernwarteeinrichtung durch die Steuerung ermöglicht.

In einer Ausführungsform ist die Überwachungseinrichtung ausgebildet, in einem Standby-Zustand des elektrischen Haushaltsgeräts die Türe zu überwachen.

Dadurch wird der technische Vorteil erreicht, dass eine Abschaltung, insbesondere Notfallabschaltung, der Fernwarteeinrichtung auch dann erfolgen kann, wenn keine Betriebsspannung an dem elektrischen Haushaltsgerät anliegt. Des Weiteren kann eine Überwachung der Türe durch die Überwachungseinrichtung und die beschriebene Funktion des Aktivierens und Deaktivierens der Fernwarteeinrichtung auch in weiteren Energiesparmodi bzw. Energiesparzuständen erfolgen, beispielsweise einem NetworkStandBy, in dem eine Netzwerkkommunikation noch möglich ist, einem LowPowerMode, der besonders energiesparend ist, einem normalen StandBy, einem OffMode, in dem nur eine minimale Überwachung von Funktionen stattfindet und dergleichen. Der NetworkStandBy-Modus kann automatisch eingenommen werden. In diesem Fall kann die Fernwarteeinrichtung während des NetworkStandBy-Modus aktiviert bleiben.

Schaltet der Benutzer das elektrische Haushaltsgerät aus, kann für den Benutzer sichtbar oder unsichtbar der NetworkStandBy-Modus eingenommen werden. Ein Einschalten des elektrischen Haushaltsgeräts, d.h. ein Anlegen einer Betriebsspannung kann ein Hochfahren des elektrischen Haushaltsgeräts aus einem Aus-Zustand oder auch aus einem beliebigen Standby-Zustand umfassen.

Kann die Überwachungseinrichtung den Zustand der Türe nicht erfassen und/oder die Türe ist nicht geschlossen, kann die Fernwarteeinrichtung deaktiviert werden.

Bei einer Stromunterbrechung, wenn der Zustand der Türe nicht erfasst werden kann, kann bei einem erneuten Anlegen einer Betriebsspannung an das elektrische Haushaltsgerät ein Aktivieren der Fernwarteeinrichtung verhindert werden. Gemäß einer Ausführungsform wird nach einer Stromunterbrechung die Fernwarteinrichtung nur dann aktiviert, wenn die Türe während und nach der Stromunterbrechung geschlossen ist.

In einer Ausführungsform ist die Fernwarteeinrichtung ausgebildet, dem Kommunikationsgerät einen Zeitpunkt einer letzten Aktivierung des elektrischen Haushaltsgeräts und/oder einen Zeitpunkt eines letzten Schließens der Türe bereitzustellen.

Dadurch wird der technische Vorteil erreicht, dass ein Benutzer kontrollieren kann, ob die entsprechende letzte Aktivität von ihm stammt, oder ein unberechtigter Dritter das elektrische Haushaltsgerät bedient hat.

Gemäß einem zweiten Aspekt wird die erfindungsgemäße Aufgabe durch ein Verfahren für ein elektrisches Haushaltsgerät gelöst, mit einer Kommunikationsschnittstelle, die ausgebildet ist, über eine Kommunikationsverbindung mit einem Kommunikationsgerät zu kommunizieren und einer Fernwarteeinrichtung, die ausgebildet ist, eine Bedienung des elektrischen Haushaltsgeräts durch das Kommunikationsgerät zu erlauben, umfassend:
Überwachen einer Türe des elektrischen Haushaltsgeräts durch eine Überwachungseinrichtung;
Erfassen einer Aktivierung des elektrischen Haushaltsgeräts durch eine Steuerung;
Aktivieren der Fernwarteeinrichtung durch die Steuerung, wenn die Überwachung ergibt, dass die Türe in einem geschlossenen Zustand ist und die lokale Aktivierung des elektrischen Haushaltsgeräts erfasst wurde, wobei die lokale Aktivierung ein Anschalten des elektrischen Haushaltsgeräts umfasst, bei dem eine Betriebsspannung an die Steuerung angelegt wird und/oder das elektrische Haushaltsgerät von einem Standby-Zustand in einen Betriebszustand versetzt wird.

Dadurch wird der technische Vorteil erreicht, dass eine Fernwarteeinrichtung eines elektrischen Haushaltsgeräts automatisch und sicher aktiviert werden kann.

In einer Ausführungsform umfasst das Verfahren ein Ausschalten des elektrischen Haushaltsgeräts durch die Steuerung, wenn erfasst wird, dass die Türe in dem offenen Zustand ist.

Dadurch wird der technische Vorteil erreicht, dass ein Benutzer eine lokale Betätigung der Türe vor dem Einschalten des elektrischen Haushaltsgeräts vornimmt. Ausführungsbeispiele der Erfindung sind in den Zeichnungen dargestellt und werden im Folgenden näher beschrieben.

Es zeigen:
Fig. 1 eine schematische Darstellung eines elektrischen Haushaltsgeräts gemäß einem Ausführungsbeispiel; und
Fig. 2 ein Flussdiagramm für ein Verfahren gemäß einem Ausführungsbeispiel.

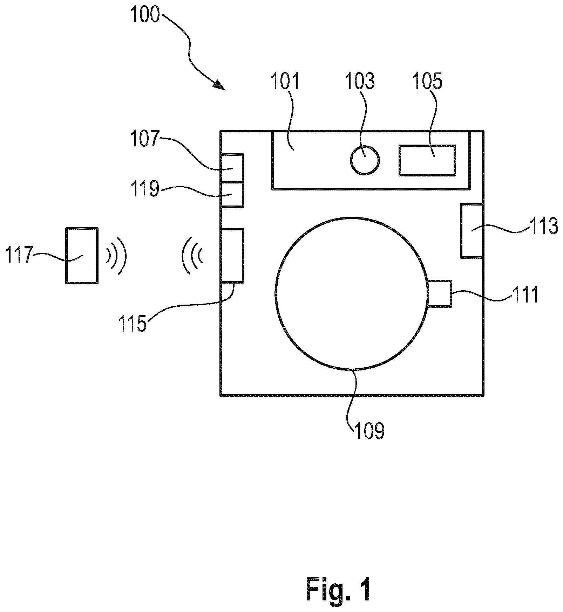

Fig. 1 zeigt ein elektrisches Haushaltsgerät 100. Das elektrische Haushaltsgerät 100 ist eine Waschmaschine. In einem weiteren Ausführungsbeispiel ist das elektrische Haushaltsgerät 100 ein Waschtrockner, ein Geschirrspüler oder ein anderes Haushaltsgerät.

Das elektrische Haushaltsgerät 100 weist ein Bedienfeld 101 auf. Über das Bedienfeld 101 kann ein Benutzer das elektrische Haushaltsgerät 100 manuell bedienen. Das Bedienfeld 101 umfasst einen Auswahlknopf 103 und eine Anzeige 105. Die Anzeige 105 kann weitere Bedienelemente umfassen, beispielsweise eine Ein-Aus-Taste, eine Start-Taste, eine Pause-Taste und dergleichen. In einem weiteren Ausführungsbeispiel variieren die Bedienmöglichkeiten. Hierbei können einige oder alle Bedienelemente elektronisch oder manuell implementiert sein, beispielsweise über eine berührungsempfindliche Anzeige.

Das elektrische Haushaltsgerät 100 weist eine Steuerung 107 auf. Die Steuerung 107 dient dazu interne Abläufe des elektrischen Haushaltsgeräts 100 zu steuern und zu regeln, insbesondere Programme abzuarbeiten, die beispielsweise durch einen Benutzer über den Auswahlknopf 103 ausgewählt wurden. Die Steuerung 107 regelt des Weiteren beispielsweise ein Heizelement zum Erwärmen einer Waschflüssigkeit, eine Trommelrotation einer Wäschetrommel und weitere Funktionen, je nach Art und Typ des elektrischen Haushaltsgeräts 100.

Das elektrische Haushaltsgerät 100 weist eine Türe 109 auf. Die Türe 109 kann einen offenen Zustand und einen geschlossenen Zustand einnehmen. In dem offenen Zustand kann ein Benutzer Gegenstände in das elektrische Haushaltsgerät 100 einfüllen, beispielsweise Wäschestücke oder Geschirr. In dem geschlossenen Zustand ist das elektrische Haushaltsgerät 100 verriegelt, d.h. ein Benutzer kann nichts mehr in das elektrische Haushaltsgerät 100 einfüllen oder herausnehmen.

Das elektrische Haushaltsgerät 100 weist einen Sensor 111 auf. Der Sensor 111 ist mit einem Schloss der Türe 109 gekoppelt. Beispielsweise handelt es sich bei dem Sensor 111 um einen Schalter, der umgelegt wird, wenn die Türe 109 in das Schloss einschnappt oder wenn das Schloss geöffnet wird. In einem weiteren Ausführungsbeispiel wird ein Anstellwinkel der Türe 109 erfasst oder eine Stellung eines Griffes der Türe 109, oder es wird auf andere Weise erfasst, ob die Türe 109 in dem geschlossenen Zustand ist oder nicht.

Das elektrische Haushaltsgerät 100 weist eine Überwachungseinrichtung 113 auf. Die Überwachungseinrichtung 113 überwacht den Sensor 111. So kann die Überwachungseinrichtung erfassen, ob die Türe 109 geschlossen ist oder nicht. In weiteren Ausführungsbeispielen kann der Sensor 111 in der Überwachungseinrichtung 113 integriert sein und/oder die Überwachungseinrichtung 113 kann Teil der Steuerung 107 sein. Die Überwachungseinrichtung 113 und der Sensor 111 können verhältnismäßig einfach ausgebildet sein, um den Zustand der Türe 109 zu überwachen. Beispielsweise kann ein elektrisch leitender Draht, der bei geschlossener Türe 109 Strom führt und bei offener Türe 109 keinen Strom führt, als Überwachungseinrichtung 113 und/oder Sensor 111 im Sinne der vorliegenden Erfindung dienen.

Das elektrische Haushaltsgerät 100 weist eine Kommunikationsschnittstelle 115 auf. Die Kommunikationsschnittstelle 115 kann eine Mobilfunkschnittstelle oder eine WLAN-Schnittstelle sein, oder einen anderen drahtgebundenen oder drahtlosen Kommunikationsstandard unterstützen.

Die Kommunikationsschnittstelle 115 ist ausgebildet, mit einem Kommunikationsgerät 117 zu kommunizieren. Das Kommunikationsgerät 117 kann beispielsweise ein Handy sein. In einem weiteren Ausführungsbeispiel handelt es sich um ein anderes Gerät, das über einen Kommunikationsstandard Informationen austauschen kann, beispielsweise ein Tablet-PC oder ein Laptop-PC.

Die Kommunikationsschnittstelle 115 ist mit der Steuerung 107 elektronisch verbunden, sodass die Steuerung 107 Informationen über die Kommunikationsschnittstelle 115 aussenden und Steuersignale von der Kommunikationsschnittstelle 115 empfangen kann.

Die Steuerung 107 umfasst eine Fernwarteeinrichtung 119. Die Fernwarteeinrichtung 119 ist ausgebildet, einen externen, d.h. "remote" Zugriff auf das elektrische Haushaltsgerät 100 zu gewähren. Mit anderen Worten: die Fernwarteeinrichtung 119 kann eine Fernsteuerung des elektrischen Haushaltsgeräts 100 erlauben oder verbieten. In einem weiteren Ausführungsbeispiel ist die Fernwarteeinrichtung 119 nicht in der Steuerung 107 integriert, sondern separat ausgeführt, insbesondere als Mikrocontroller.

Die Steuerung 107 kann die Fernwarteeinrichtung 119 aktivieren, um eine Fernsteuerung des elektrischen Haushaltsgeräts 100 zuzulassen oder die Fernwarteeinrichtung 119 deaktivieren, um eine Fernsteuerung nicht zuzulassen.

Die Steuerung 107 kann die Fernwarteeinrichtung 119 aktivieren, wenn die Türe 109 in dem geschlossenen Zustand ist und das elektrische Haushaltsgerät 100 eingeschaltet wird. Die Steuerung 107 kann die Fernwarteeinrichtung 119 aktivieren, wenn die Türe 109 in dem geschlossenen Zustand ist und ein Programm gestartet wird.

Die Steuerung 107 kann die Fernwarteeinrichtung 119 deaktivieren, wenn das elektrische Haushaltsgerät 100 eingeschaltet ist und die Türe 109 in den geöffneten Zustand versetzt wird, d.h. geöffnet wird und die Überwachungseinrichtung 113 den geschlossenen Zustand nicht erfasst.

Das elektrische Haushaltsgerät 100 umfasst einen Standby-Zustand, in dem das elektrische Haushaltsgerät 100 weniger Energie verbraucht, als in einem aktivierten Betriebszustand. In dem Standby-Zustand wird jedoch die Kommunikationsschnittstelle 115 weiterhin mit Energie versorgt, sodass eine Kommunikation über die Kommunikationsschnittstelle 115 möglich ist. In diesem Standby-Zustand wird auch die Steuerung 107 und die Überwachungseinrichtung 113 mit Energie versorgt, um die Fernwarteeinrichtung 119 in einem Störfall gegebenenfalls ausschalten zu können.

Die Steuerung 107 des elektrischen Haushaltsgeräts 100 kann ferner ausgebildet sein, wenn in einem Betriebszustand des elektrischen Haushaltsgeräts 100 die Türe 107 geöffnet wird, das elektrische Haushaltsgerät 100 automatisch auszuschalten oder in einen Standby-Zustand zu versetzen. In einem solchen Standby-Zustand kann beispielsweise die Anzeige 105 des elektrischen Haushaltsgeräts 100 ausgeschaltet oder unbeleuchtet sein, um dem Benutzer sichtbar zu verdeutlichen, dass sich das elektrische Haushaltsgerät 100 in einem Standby-Zustand befindet. Somit kann sichergestellt werden, dass zum Aktivieren des elektrischen Haushaltsgeräts 100, d.h. zum Einschalten bzw. zum Versetzen aus dem Standby-Zustand in den Betriebszustand, der Benutzer lokal sowohl die Türe 109 schließen als auch beispielsweise eine Ein-Aus-Taste des elektrischen Haushaltsgeräts 100 betätigen muss. Da hiermit die beispielsweise nach der Norm IEC 60335-2-7, Absatz 20.106 erforderlichen Sicherheitsvoraussetzungen erfüllt werden, kann bei dieser Ausführungsform die Aktivierung der Fernwarteeinrichtung 119 an das Aktivieren, d.h. Einschalten bzw. Hochfahren aus einem Standby-Zustand, des elektrischen Haushaltsgeräts 100 gekoppelt werden, indem das Aktivieren des elektrischen Haushaltsgeräts 100 automatisch die Fernwarteeinrichtung 119 aktiviert.

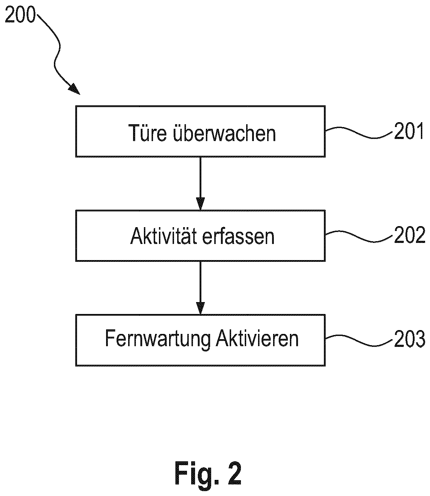

Fig. 2 zeigt ein Flussdiagramm 200 eines Verfahrens gemäß einem Ausführungsbeispiel.

In Schritt 201 wird die Türe 109 überwacht. Die Überwachung der Türe 109 dauert über die gesamte Betriebszeit des elektrischen Haushaltsgeräts 100 an und umfasst auch verschiedene Ruhezustände bzw. Standby-Zustände, wie den NetworkStandBy.

Zur Überwachung der Türe 109 erfasst der Sensor 111 den Zustand der Türe 109 anhand des Schließmechanismus der Türe 109. In einem weiteren Ausführungsbeispiel wird der Zustand der Türe 109 anders erfasst. Die Überwachungseinrichtung 113 fragt den erfassten Zustand der Türe 109 von dem Sensor 111 ab. Die Überwachungseinrichtung 113 übermittelt den Zustand der Türe 109 dann an die Steuerung 107. In einem weiteren Ausführungsbeispiel ist die Überwachungseinrichtung 113 in die Steuerung 107 integriert, d.h. die Steuerung übernimmt die Funktionen der Überwachungseinrichtung 113.

In einem Schritt 202 wird eine Aktivität erfasst. Hierbei wird eine lokale Betätigung des elektrischen Haushaltsgeräts 100 durch einen Benutzer als Aktivität erfasst. Die Aktivität kann ein Anschalten des elektrischen Haushaltsgeräts 100 sein. In einem weiteren zusätzlichen oder alternativen Ausführungsbeispiel handelt es sich um das Starten eines Programms. Die Aktivität wird durch die Steuerung 107 erfasst. In einem weiteren Ausführungsbeispiel wird die Aktivität durch einen weiteren Sensor erfasst und das Ergebnis der Erfassung der Steuerung 107 bereitgestellt.

In einem Schritt 203 wird die Fernsteuerung aktiviert. Hierzu wird die Fernwarteeinheit 119 aktiviert, sodass ein Benutzer über das Kommunikationsgerät 117 und die Kommunikationsschnittstelle 115 auf das elektrische Haushaltsgerät 100 zugreifen kann. Die Fernwarteeinheit 119 wird dann aktiviert, wenn die oben genannten Bedingungen erfüllt sind, d.h. wenn sich die Türe 109 in dem geschlossenen Zustand befindet und die Aktivität, insbesondere das Einschalten des elektrischen Haushaltsgeräts 100 oder das Starten eines Programms, erfolgt ist.

Ist die Fernwarteeinheit 119 aktiviert, so wird durch die Überwachung der Türe 109 in Schritt 201 sichergestellt, dass das elektrische Haushaltsgerät 100 geschlossen ist. Wird erkannt, dass die Türe 109 nicht mehr in dem geschlossenen Zustand ist, wird die Fernwarteeinheit 119 deaktiviert. In einem weiteren Ausführungsbeispiel entfällt diese Deaktivierung.

Die Steuerung 107 ist des Weiteren ausgebildet, nach einem Stromausfall den Status der Fernwarteeinrichtung 119 zu überprüfen und, wenn der Zustand der Türe 109 nicht erfassbar ist, die Fernwarteeinrichtung 119 zu deaktivieren. In einem weiteren Ausführungsbeispiel kann dies entfallen.

Die Steuerung 107 ist ausgebildet, über die Kommunikationsschnittstelle 115 Informationen bereitzustellen, wie Restdauer eines Programms, Zeitpunkt einer letzten Aktivierung eines Programms, Zeitpunkt eines letzten Schließens der Türe 109, Art des Programms und weitere Informationen.

Die Steuerung 107 ist ausgebildet, die Fernwarteeinrichtung 119 zu deaktivieren, wenn wenigstens einer der folgenden Fälle erfasst wird, und zwar durch die Steuerung 107 oder die Überwachungseinrichtung 113: Stromausfall am elektrischen Haushaltsgerät 100, lokales Ausschalten des elektrischen Haushaltsgeräts 100 oder der Fernwarteeinrichtung 119, Eintreten eines Fehlers aus einem vorbestimmten Fehlerkatalog, Deaktivieren eines Programms, lokales Unterbrechen eines Programms an dem elektrischen Haushaltsgerät 100.

### Bezugszeichenliste

- 100: elektrisches Haushaltsgerät
- 101: Bedienfeld
- 103: Auswahlknopf
- 105: Anzeige
- 107: Steuerung
- 109: Türe
- 111: Sensor
- 113: Überwachungseinrichtung
- 115: Kommunikationsschnittstelle
- 117: Kommunikationsgerät
- 119: Fernwarteinrichtung
- 200: Flussdiagramm
- 201 - 203: Verfahrensschritte

## Patentansprüche

1. Elektrisches Haushaltsgerät (100) mit
einer Kommunikationsschnittstelle (115), die ausgebildet ist, über eine Kommunikationsverbindung mit einem Kommunikationsgerät (117) zu kommunizieren;
einer Fernwarteeinrichtung (119), die ausgebildet ist, eine Bedienung des elektrischen Haushaltsgeräts (100) durch das Kommunikationsgerät (117) zu ermöglichen;
einer Türe (109), die ausgebildet ist, in einem offenen Zustand einen Bereich des elektrischen Haushaltsgeräts (100) zu öffnen oder in einem geschlossenen Zustand den Bereich zu schließen; und
einer Überwachungseinrichtung (113), die ausgebildet ist, den Zustand der Türe (109) zu erfassen,
**gekennzeichnet durch**
eine Steuerung (107), die ausgebildet ist, die Fernwarteeinrichtung (119) automatisch zu aktivieren, wenn die Türe (109) in dem geschlossenen Zustand ist und eine lokale Aktivierung des elektrischen Haushaltsgeräts (100) erfolgt,
wobei die lokale Aktivierung ein Anschalten des elektrischen Haushaltsgeräts (100) umfasst, bei dem eine Betriebsspannung an die Steuerung (107) angelegt wird und/oder das elektrische Haushaltsgerät (100) von einem Standby-Zustand in einen Betriebszustand versetzt wird.

2. Elektrisches Haushaltsgerät (100) nach Anspruch 1, **dadurch gekennzeichnet, dass** das elektrische Haushaltsgerät (100) ein Wäschepflegegerät, insbesondere eine Waschmaschine oder ein Waschtrockner, oder eine Spülmaschine ist.

3. Elektrisches Haushaltsgerät (100) nach einem der vorstehenden Ansprüche, **dadurch gekennzeichnet, dass** die Kommunikationsschnittstelle (115) eine Mobilfunkschnittstelle und/oder eine WLAN-Schnittstelle und/oder eine LAN-Schnittstelle umfasst.

4. Elektrisches Haushaltsgerät (100) nach einem der vorstehenden Ansprüche, **dadurch gekennzeichnet, dass** die Fernwarteeinrichtung (119) ausgebildet ist, ein Starten eines Programms des elektrischen Haushaltsgeräts (100), ein Unterbrechen oder ein Beenden eines Programms des elektrischen Haushaltsgeräts (100), ein Ändern von Betriebsparametern eines Programms des elektrischen Haushaltsgeräts (100) oder ein Deaktivieren des elektrischen Haushaltsgeräts (100) zu ermöglichen.

5. Elektrisches Haushaltsgerät (100) nach einem der vorstehenden Ansprüche, **dadurch gekennzeichnet, dass** die Überwachungseinrichtung (113) einen Sensor (111) umfasst, der an einem Schloss der Türe (109) angeordnet ist und erfasst, ob die Türe (109) in dem geschlossenen Zustand oder dem offenen Zustand ist.

6. Elektrisches Haushaltsgerät (100) nach einem der vorstehenden Ansprüche, **dadurch gekennzeichnet, dass** die lokale Aktivierung ein Starten eines Programms auf dem elektrischen Haushaltsgerät (100) umfasst.

7. Elektrisches Haushaltsgerät (100) nach einem der vorstehenden Ansprüche, **dadurch gekennzeichnet, dass** die Steuerung (107) ausgebildet ist, das elektrische Haushaltsgerät (100) auszuschalten oder in einen Standby-Zustand zu versetzen, wenn das elektrische Haushaltsgerät (100) eingeschaltet ist und die Türe (109) geöffnet ist.

8. Elektrisches Haushaltsgerät (100) nach einem der vorstehenden Ansprüche, **dadurch gekennzeichnet, dass** die Steuerung (107) ausgebildet ist, die Fernwarteeinrichtung (119) zu deaktivieren, wenn die Fernwarteeinrichtung (119) aktiv ist und die Überwachungseinrichtung (113) erfasst, dass die Türe (109) in dem offenen Zustand ist.

9. Elektrisches Haushaltsgerät (100) nach einem der vorstehenden Ansprüche, **dadurch gekennzeichnet, dass** die Steuerung (107) ausgebildet ist, ein Aktivieren des elektrischen Haushaltsgeräts (100) zu unterbinden, solange die Türe (109) in dem offenen Zustand ist.

10. Elektrisches Haushaltsgerät (100) nach einem der vorstehenden Ansprüche, **dadurch gekennzeichnet, dass** die Steuerung (107) ausgebildet ist, ein Aktivieren eines Programms zu unterbinden, solange die Türe (109) in dem offenen Zustand ist.

11. Elektrisches Haushaltsgerät (100) nach einem der vorstehenden Ansprüche, **dadurch gekennzeichnet, dass** die Überwachungseinrichtung (113) ausgebildet ist, in einem Standby-Zustand des elektrischen Haushaltsgeräts (100) die Türe (109) zu überwachen.

12. Elektrisches Haushaltsgerät (100) nach einem der vorstehenden Ansprüche, **dadurch gekennzeichnet, dass** die Fernwarteeinrichtung (119) ausgebildet ist, dem Kommunikationsgerät (117) einen Zeitpunkt einer letzten Aktivierung des elektrischen Haushaltsgeräts (100) und/oder einen Zeitpunkt eines letzten Schließens der Türe (109) bereitzustellen.

13. Verfahren für ein elektrisches Haushaltsgerät (100) mit einer Kommunikationsschnittstelle (115), die ausgebildet ist, über eine Kommunikationsverbindung mit einem Kommunikationsgerät (117) zu kommunizieren und einer Fernwarteeinrichtung (119), die ausgebildet ist, eine Bedienung des elektrischen Haushaltsgeräts (100) durch das Kommunikationsgerät (117) zu erlauben, umfassend
Überwachen (201) einer Türe (109) des elektrischen Haushaltsgeräts (100) durch eine Überwachungseinrichtung (113);
Erfassen (202) einer Aktivierung des elektrischen Haushaltsgeräts (100) durch eine Steuerung (107);
**gekennzeichnet durch**
Aktivieren (203) der Fernwarteeinrichtung (119) durch die Steuerung (107), wenn die Überwachung ergibt, dass die Türe (109) in einem geschlossenen Zustand ist und die lokale Aktivierung des elektrischen Haushaltsgeräts (100) erfasst wurde, wobei die lokale Aktivierung ein Anschalten des elektrischen Haushaltsgeräts (100) umfasst, bei dem eine Betriebsspannung an die Steuerung (107) angelegt wird und/oder das elektrische Haushaltsgerät (100) von einem Standby-Zustand in einen Betriebszustand versetzt wird.

14. Verfahren nach Anspruch 13, **gekennzeichnet, durch** Ausschalten des elektrischen Haushaltsgeräts (100) durch die Steuerung (107), wenn erfasst wird, dass die Türe (109) in dem offenen Zustand ist.

## Claims

1. Electrical household appliance (100) having
a communication interface (115) that is configured so as to communicate with a communication device (117) via a communication connection;
a remote control facility (119) that is configured so as to render it possible to operate the electrical household appliance (100) by way of a communication device (117);
a door (109) that is configured so as in an open state to open a region of the electrical household appliance (100) or in a closed state to close said region; and
a monitoring facility (113) that is configured so as to detect the state of the door (109);
**characterised by**
a controller (107) that is configured so as to automatically activate the remote control facility (119) if the door (109) is in the closed state and the electrical household appliance (100) is activated locally,
wherein the local activation includes switching on the electrical household appliance (100), in that an operating voltage is applied to the controller (107) and/or the electrical household appliance (100) is transferred from a standby state into an operating state.

2. Electrical household appliance (100) according to claim 1, **characterised in that** the electrical household appliance (100) is a laundry care appliance, in particular a washing machine or a washer-dryer, or a dishwasher.

3. Electrical household appliance (100) according to one of the preceding claims, **characterised in that** the communication interface (115) comprises a mobile phone network interface and/or a WLAN interface and/or a LAN interface.

4. Electrical household appliance (100) according to one of the preceding claims, **characterised in that** the remote control facility (119) is configured so as to render it possible to start a program of the electrical household appliance (100), to interrupt or terminate a program of the electrical household appliance (100), to change operating parameters of a program of the electrical household appliance (100) or to deactivate the electrical household appliance (100).

5. Electrical household appliance (100) according to one of the preceding claims, **characterised in that** the monitoring facility (113) comprises a sensor (111) that is arranged on a lock of the door (109) and detects whether the door (109) is in the closed state or the open state.

6. Electrical household appliance (100) according to one of the preceding claims, **characterised in that** the local activation includes starting a program on the electrical household appliance (100).

7. Electrical household appliance (100) according to one of the preceding claims, **characterised in that** the controller (107) is configured so as to switch off the electrical household appliance (100) or to transfer said electrical household appliance into a standby state if the electrical household appliance (100) is switched on and the door (109) is opened.

8. Electrical household appliance (100) according to one of the preceding claims, **characterised in that** the controller (107) is configured so as to deactivate the remote control facility (119) if the remote control facility (119) is active and the monitoring facility (113) detects that the door (109) is in the open state.

9. Electrical household appliance (100) according to one of the preceding claims, **characterised in that** the controller (107) is configured so as to prevent the electrical household appliance (100) being activated as long as the door (109) is in the open state.

10. Electrical household appliance (100) according to one of the preceding claims, **characterised in that** the controller (107) is configured so as to prevent the program being activated as long as the door (109) is in the open state.

11. Electrical household appliance (100) according to one of the preceding claims, **characterised in that** the monitoring facility (113) is configured so as to monitor the door (109) when the electrical household appliance (100) is in a standby state.

12. Electrical household appliance (100) according to one of the preceding claims, **characterised in that** the remote control facility (113) is configured so as to inform the communication device (117) of a point in time at which the electrical household appliance (100) was last activated and/or a point in time at which the door (109) was last closed.

13. Method for an electrical household appliance (100) a having a communication interface (115) that is configured so as to communicate with a communication device (117) via a communication connection and having a remote control facility (119) that is configured so as to render it possible to operate the electrical household appliance (100) by way of a communication device (117), said method including:
monitoring (201) a door (109) of the electrical household appliance (100) by way of a monitoring facility (113);
detecting (202) an activation of the electrical household appliance (100) by way of a controller (107);
**characterised by**
activating (203) the remote control facility (119) by way of the controller (119) if the monitoring procedure indicates that the door (109) is in a closed state and it has been detected that the electrical household appliance (100) is activated locally,
wherein the local activation includes switching on the electrical household appliance (100), in that an operating voltage is applied to the controller (107) and/or the electrical household appliance (100) is transferred from a standby state into an operating state.

14. Method according to claim 13, **characterised by** switching off the electrical household appliance (100) by way of the controller (107) if it is detected that the door (109) is in the open state.

## Revendications

1. Appareil électrique ménager (100), comprenant
une interface de communication (115) réalisée pour communiquer par une liaison de communication avec un appareil de communication (117) ;
un dispositif de contrôle à distance (119) réalisé pour permettre la commande de l'appareil électrique ménager (100) par l'appareil de communication (117) ;
une porte (109) réalisée pour mettre une zone de l'appareil électrique ménager (100) en position ouverte ou mettre la zone en position fermée ; et
un dispositif de surveillance (113) réalisé pour détecter la position de la porte (109), **caractérisé par**
une commande (107) réalisée pour activer automatiquement le dispositif de contrôle à distance (119) quand la porte (109) est en position fermée et qu'il se produit une activation locale de l'appareil électrique ménager (100),
l'activation locale comprenant une mise sous tension de l'appareil électrique ménager (100), dans laquelle une tension de service est appliquée à la commande (107) et/ou l'appareil électrique ménager (100) passe d'un mode veille à un mode de service.

2. Appareil électrique ménager (100) selon la revendication 1, **caractérisé en ce que** l'appareil électrique ménager (100) est un appareil d'entretien du linge, en particulier une machine à laver ou un séchoir, ou un lave-vaisselle.

3. Appareil électrique ménager (100) selon l'une des revendications précédentes, **caractérisé en ce que** l'interface de communication (115) comprend une interface radio mobile et/ou une interface WLAN et/ou une interface LAN.

4. Appareil électrique ménager (100) selon l'une des revendications précédentes, **caractérisé en ce que** le dispositif de contrôle à distance (119) est réalisé pour permettre un démarrage d'un programme de l'appareil électrique ménager (100), une interruption ou une clôture d'un programme de l'appareil électrique ménager (100), une modification de paramètres de fonctionnement d'un programme de l'appareil électrique ménager (100) ou une désactivation de l'appareil électrique ménager (100).

5. Appareil électrique ménager (100) selon l'une des revendications précédentes, **caractérisé en ce que** le dispositif de surveillance (113) comprend un détecteur (111) qui se trouve sur une serrure de la porte (109) et détecte si la porte (109) est en position fermée ou en position ouverte.

6. Appareil électrique ménager (100) selon l'une des revendications précédentes, **caractérisé en ce que** l'activation locale comprend un démarrage d'un programme sur l'appareil électrique ménager (100).

7. Appareil électrique ménager (100) selon l'une des revendications précédentes, **caractérisé en ce que** la commande (107) est réalisée pour mettre l'appareil électrique ménager (100) hors tension ou en mode veille, quand l'appareil électrique ménager (100) est sous tension et que la porte (109) est ouverte.

8. Appareil électrique ménager (100) selon l'une des revendications précédentes, **caractérisé en ce que** la commande (107) est réalisée pour désactiver le dispositif de contrôle à distance (119) quand le dispositif de contrôle à distance (119) est actif et le dispositif de surveillance (113) détecte que la porte (109) est bien en position ouverte.

9. Appareil électrique ménager (100) selon l'une des revendications précédentes, **caractérisé en ce que** la commande (107) est réalisée pour empêcher une activation de l'appareil électrique ménager (100) tant que la porte (109) est en position ouverte.

10. Appareil électrique ménager (100) selon l'une des revendications précédentes, **caractérisé en ce que** la commande (107) est réalisée pour empêcher une activation d'un programme tant que la porte (109) est en position ouverte.

11. Appareil électrique ménager (100) selon l'une des revendications précédentes, **caractérisé en ce que** le dispositif de surveillance (113) est réalisé pour surveiller la porte (109) quand l'appareil électrique ménager (100) est en mode veille.

12. Appareil électrique ménager (100) selon l'une des revendications précédentes, **caractérisé en ce que** le dispositif de contrôle à distance (119) est réalisé pour fournir à l'appareil de communication (117) le moment de la dernière activation de l'appareil électrique ménager (100) et/ou le moment de la dernière fermeture de la porte (109).

13. Procédé pour un appareil électrique ménager (100) comprenant une interface de communication (115) réalisée pour communiquer par une liaison de communication avec un appareil de communication (117) et un dispositif de contrôle à distance (119) réalisé pour permettre la commande de l'appareil électrique ménager (100) par l'appareil de communication (117), comprenant
la surveillance (201) d'une porte (109) de l'appareil électrique ménager (100) par un dispositif de surveillance (113) ;
la détection (202) d'une activation de l'appareil électrique ménager (100) par une commande (107) ;
**caractérisé par**
l'activation (203) du dispositif de contrôle à distance (119) par la commande (107) quand la surveillance fait état de la position fermée de la porte (109) et qu'une activation locale de l'appareil électrique ménager (100) a été détectée,
l'activation locale comprenant une mise sous tension de l'appareil électrique ménager (100), dans laquelle une tension de service est appliquée à la commande (107) et/ou l'appareil électrique ménager (100) passe d'un mode veille à un mode de service.

14. Procédé selon la revendication 13, **caractérisé par** la mise hors tension de l'appareil électrique ménager (100) par la commande (107), quand il est détecté que la porte (109) est en position ouverte.
